# FASCICULE DE BREVET EUROPEEN

(11) **EP 3 089 295 B1**
(45) Date de publication et mention de la délivrance du brevet: **07.04.2021**
(21) Numéro de dépôt: 16166335.6
(22) Date de dépôt: 21.04.2016
(51) Int. Cl.: H01R 4/64, H02G 3/04, H01R 4/48

(54) **DISPOSITIF D'INTERCONNEXION ÉLECTRIQUE CONFIGURÉ POUR ÉTABLIR UNE LIAISON ÉQUIPOTENTIELLE ENTRE UN TRONÇON DE CHEMIN DE CÂBLES ET UN TRONÇON DE CÂBLE ÉLECTRIQUE**
ELEKTRISCHE VERBINDUNGSVORRICHTUNG ZUR SPANNUNGSAUSGLEICHSVERBINDUNG VON EINEM KABELRINNENABSCHNITT MIT EINES STROMKABELABSCHNITTS
ELECTRICAL INTERCONNECTION DEVICE FOR AN EQUIPOTENTIAL CONNECTION BETWEEN A CABLE TRAY PIECE AND AN ELECTRICAL CABLE PIECE.

(30) Priorité: 29.04.2015 FR 1553864
(43) Date de publication de la demande: 02.11.2016
(73) Titulaire: Mecatraction, 19230 Arnac Pompadour (FR)
(72) Inventeur: LOPEZ, Thierry, 19130 VOUTEZAC (FR); GERY, Eric, 19350 CONCEZE (FR)
(74) Mandataire: Santarelli

(56) Documents cités:
- FR-A1- 2 694 141
- GB-A- 885 372
- GB-A- 2 467 426
- US-A1- 2014 220 834
- US-B1- 7 686 625

## Description

### DOMAINE DE L'INVENTION

L'invention a trait aux dispositifs d'interconnexion électrique configurés pour établir une liaison équipotentielle entre un tronçon de chemin de câbles et un tronçon de câble électrique.

L'invention a également trait aux systèmes de cheminement de câbles électriques et/ou de télécommunications, comportant au moins un tronçon de chemin de câbles, au moins un tronçon d'un câble électrique non isolé, et au moins un tel dispositif d'interconnexion électrique.

### ARRIERE PLAN TECHNOLOGIQUE

On connaît déjà des systèmes de cheminement de câbles électriques comportant un tronçon de chemin de câbles ayant une forme de gouttière et présentant des fils de chaîne qui s'étendent longitudinalement et des fils de trame en U qui s'étendent transversalement, un tronçon d'un câble électrique non isolé, et un ou plusieurs dispositifs d'interconnexion électrique configurés pour établir une liaison équipotentielle entre le tronçon de chemin de câbles et le tronçon de câble électrique.

Plus précisément, ces dispositifs d'interconnexion électrique sont configurés pour recevoir une portion d'un fil de chaîne du tronçon de chemin de câbles dans un premier logement, ou apparenté, et aussi pour recevoir une portion du tronçon de câble électrique non isolé dans un second logement.

De tels dispositifs d'interconnexion électrique peuvent être en forme de serre-fil, comportant une vis, deux rondelles, un écrou duquel s'étend une cheminée ouverte latéralement et dont la paroi interne est taraudée, ainsi qu'un bouchon de serrage fileté en prise dans le logement ménagé dans la cheminée.

Le système est configuré de telle sorte qu'une fois assemblé, deux portions de deux fils de chaîne sont prises en sandwich entre les deux rondelles (qui définissent ainsi un logement) et serrées entre ces dernières au moyen de l'ensemble vis écrou. Une portion du câble électrique traverse la cheminée par le biais de ses ouvertures latérales et le bouchon de serrage vient serrer cette portion de câble dans la cheminée.

On connaît aussi des dispositifs d'interconnexion électrique à mâchoires, dont une mâchoire inférieure dans laquelle sont ménagés deux logements et une mâchoire supérieure présentant des griffes de serrage agencées en regard des logements. Une vis permet le rapprochement des deux mâchoires l'une contre l'autre.

Dans de tels dispositifs à mâchoires, la portion de fil de chaîne et la portion de câble électrique sont introduites en même temps dans les logements dédiés respectifs de la mâchoire inférieure, et la mâchoire supérieure est rapprochée de la mâchoire inférieure par actionnement de la vis de sorte que les griffes de la mâchoire supérieure viennent serrer la portion de fil de chaîne et la portion de câble électrique dans les logements dédiés respectifs.

De tels dispositifs en forme de serre-vis ou à mâchoires nécessitent des outils pour leur montage à la fois avec le tronçon de chemin de câbles et le tronçon de câble électrique.

On connaît aussi des dispositifs à deux logements qui prennent la forme d'un double U, présentant une paroi de fond, deux parois latérales qui s'étendent verticalement à la paroi de fond et une paroi centrale, logée entre les parois latérales, et qui s'étend également verticalement à la paroi de fond et en regard des parois latérales.

Dans de tels dispositifs en double U, la portion de fil de chaîne et la portion de câble électrique sont introduites dans les logements dédiés respectifs et ne sont pas retenues dans ces logements de sorte que ces portions peuvent en être extraites aisément.

La demande de brevet FR 2 694 141 décrit une agrafe de mise à la masse d'un câble ayant une gaine extérieure enrobant une tresse de masse, l'agrafe étant constituée d'un plaque métallique courbée ayant deux ailes se faisant face et comportant chacune une découpe formant un couteau pour couper la gaine afin de mettre à nu la tresse de masse lors de la translation du câble entre les ailes et établir un contact électrique avec la tresse de masse.

La demande de brevet GB 2 467 426 décrit une éclisse pour assembler des tronçons de chemins de câbles par leurs extrémités, comportant des pattes allongées élastiques formant un anti-retour une fois que les fils de trame des tronçons de chemins de câbles respectifs sont introduits dans les logements respectifs de cette éclisse.

### OBJET DE L'INVENTION

L'invention vise à fournir un dispositif d'interconnexion électrique amélioré, qui soit particulièrement sûr, simple, commode et économique, tant à la fabrication qu'à l'utilisation.

L'invention a ainsi pour objet, sous un premier aspect, un dispositif d'interconnexion électrique comportant les caractéristiques exposées dans la revendication 1.

Le dispositif d'interconnexion électrique selon l'invention, grâce à sa forme en agrafe métallique élastique, peut être assemblé sans outil à la fois avec la première portion d'un fil de chaîne et/ou de trame du tronçon de chemin de câbles et avec la portion du tronçon de câble électrique.

En particulier, l'agrafe métallique élastique et la première portion du fil de chaîne et/ou de trame peuvent être assujetties mécaniquement ensemble par clipsage grâce à la sollicitation de l'agrafe sur cette première portion de fil de sorte à introduire cette dernière dans le premier logement de l'agrafe.

En outre, l'agrafe métallique élastique et la portion du tronçon de câble électrique peuvent être assujetties mécaniquement ensemble par clipsage grâce à la sollicitation de cette portion de câble sur cette agrafe de sorte à introduire la portion de câble dans le second logement de cette agrafe.

Le désassemblage mécanique de l'agrafe métallique élastique vis-à-vis à la fois de la première portion de fil de chaîne et/ou de trame du tronçon de chemin de câbles et de la portion du tronçon de câble électrique se fait par conséquent aisément par des actions de déclipsage.

Le dispositif d'interconnexion électrique selon l'invention, grâce à ses languettes flexibles, permet de maintenir en position à la fois la première portion de fil de chaîne et/ou de trame du tronçon de chemin de câbles et la portion du tronçon de câble électrique dans les logements dédiés respectifs de l'agrafe ; ces portions ne pouvant donc pas se retirer des logements dédiés respectifs sans sollicitation extérieure.

Le dispositif d'interconnexion électrique selon l'invention, grâce à sa configuration en agrafe élastique et aux languettes flexibles que cette agrafe présente, permet également de définir des premier et second logements de tailles variables.

Le dispositif d'interconnexion électrique selon l'invention est ainsi adaptable en ce qu'il offre la possibilité d'être assemblé avec des chemins de câbles de différentes sections et/ou dont les fils de chaîne et/ou de trame ont des sections distinctes ; et aussi d'être assemblé avec des tronçons de câble électrique également de différentes sections.

Le dispositif d'interconnexion électrique selon l'invention est donc particulièrement performant et sûr tout en restant particulièrement simple, commode et économique notamment à la fabrication et à la mise en place.

Selon des caractéristiques préférées, simples, commodes et économiques du dispositif selon l'invention :
- ladite agrafe métallique élastique comporte une patte anti-retour ménagée dans ladite deuxième languette, saillant dans ledit second logement et configurée pour empêcher ladite portion dudit tronçon de câble électrique de se retirer dudit second logement sans une sollicitation extérieure sur ladite paroi externe ;
- ladite portion de jonction de ladite paroi interne s'étend depuis lesdites portions droites desdits bras flexibles en direction opposée à ladite paroi principale de sorte à former une première ouverture d'introduction dudit premier logement ; et/ou ladite portion de jonction de ladite paroi externe s'étend depuis lesdites portions droites desdits bras flexibles en direction opposée à ladite paroi principale de sorte à former une deuxième ouverture d'introduction dudit second logement ;
- ladite agrafe métallique élastique comporte au moins une patte d'appui incurvée, s'étendant depuis ladite première extrémité de ladite paroi principale et configurée pour reposer sur ladite première portion de fil de chaîne et/ou de trame dudit tronçon de chemin de câbles, lorsque ladite agrafe métallique élastique est assemblée sur ledit tronçon de chemin de câbles ;

- le dispositif comporte un organe de positionnement de ladite agrafe métallique élastique sur ledit tronçon de chemin de câbles, configuré pour empêcher cette dernière de se déplacer en rotation autour et/ou en translation vis-à-vis de ladite première portion de fil de chaîne et/ou de trame dudit tronçon de chemin de câbles, lorsque ladite agrafe métallique élastique est assemblée sur ledit tronçon de chemin de câbles ;
- ledit organe de positionnement est formé en une seule pièce avec ladite agrafe métallique élastique ;
- ledit organe de positionnement comporte une paroi d'appui ménagée à distance de ladite paroi principale et configurée pour venir en appui contre une deuxième portion d'un fil de trame et/ou de chaîne dudit tronçon de chemin de câbles, ladite paroi d'appui présentant à une extrémité libre une portion en gouttière de convexité tournée du côté de ladite paroi principale ;
- ledit organe de positionnement comporte une fenêtre ménagée dans ladite paroi d'appui et un ergot saillant d'un bord de ladite fenêtre et configuré pour venir en butée contre ladite deuxième portion de fil de trame et/ou de chaîne dudit tronçon de chemin de câbles, laquelle deuxième portion est alors interposée entre ledit ergot et ladite portion en gouttière ;
- ladite paroi principale s'étend globalement dans un plan principal et ladite paroi d'appui s'étend dans un plan incliné par rapport audit plan principal ; et/ou
- ladite agrafe métallique élastique comporte un pontet s'étendant depuis ladite première extrémité de ladite paroi principale et se raccordant à une portion de jonction de ladite paroi d'appui.

L'invention a aussi pour objet, sous un deuxième aspect, un système de cheminement de câbles électriques et/ou de télécommunications, comportant au moins un tronçon de chemin de câbles ayant une forme de gouttière et présentant des fils de chaîne qui s'étendent longitudinalement et des fils de trame en U qui s'étendent transversalement, au moins un tronçon d'un câble électrique non isolé, et au moins un dispositif d'interconnexion électrique tel que celui décrit ci-dessus et conforme à l'invention.

Le système de cheminement de câbles électriques et/ou de télécommunications selon l'invention peut être assemblé et désassemblé mécaniquement sans outil et est particulièrement performant et sûr tout en restant particulièrement simple, commode et économique notamment à la fabrication et à l'utilisation.

Selon des caractéristiques préférées, simples, commodes et économiques du système selon l'invention, ladite au moins une agrafe métallique élastique est configurée pour recevoir une portion d'un fil de chaîne dudit au moins un tronçon de chemin de câbles dans son premier logement et pour recevoir une portion dudit au moins un tronçon de câble électrique non isolé dans son second logement.

### BREVE DESCRIPTION DES DESSINS

On va maintenant poursuivre l'exposé de l'invention par la description d'un exemple de réalisation, donnée ci-après à titre illustratif et non limitatif, en référence aux dessins annexés sur lesquels :
- la figure 1 est une vue en perspective d'un système de cheminement de câbles électriques et/ou de télécommunications, comportant un tronçon de chemin de câbles, un tronçon de câble électrique et un dispositif d'interconnexion électrique formé par une agrafe métallique élastique, conformément à un mode de réalisation ;
- les figures 2 à 4 représentent en perspective isolée l'agrafe métallique élastique visible sur la figure 1, prises selon différents angles de vues ;
- la figure 5 est une de côté de l'agrafe métallique élastique illustrée sur les figures 2 à 4 ;
- les figures 6 et 7 représentent, en perspective et selon différents angles de vues, une première étape d'assemblage du système de cheminement de câbles électriques et/ou de télécommunications illustré sur la figure 1 ;
- la figure 8 est une vue partielle en coupe, prise selon un plan médian et transversal, de l'agrafe métallique élastique et d'un fil de chaîne du tronçon de chemin de câbles, lors de cette première étape d'assemblage ;
- les figures 9, 10 et 11 sont des vues similaires à celles des figures 6 à 8, montrant ici une deuxième étape d'assemblage du système illustré sur la figure 1 ;
- les figures 12 et 13 sont des vues similaires à celles des figures 6 et 8, ou 9 et 11, montrant ici une troisième étape d'assemblage du système illustré sur la figure 1 ;
- les figures 14 et 15 sont des vues similaires à celles des figures 12 et 13, montrant ici une quatrième étape d'assemblage du système illustré sur la figure 1 ; et
- les figures 16 et 17 sont des vues similaires à celles des figures 2 et 14, montrant une variante de réalisation de l'agrafe métallique élastique.

### DESCRIPTION DETAILLEE D'UN EXEMPLE DE REALISATION

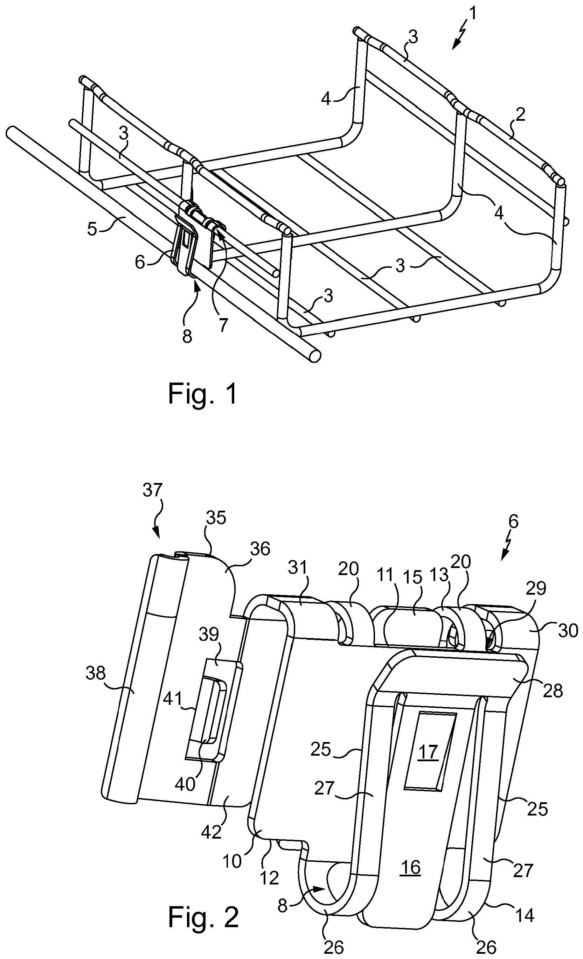

La figure 1 illustre un système 1 de cheminement de câbles électriques et/ou de télécommunications (non représentés).

Ce système 1 comporte ici un tronçon de chemin de câbles 2 ayant une forme de gouttière et présentant des fils de chaîne 3 qui s'étendent longitudinalement et des fils de trame 4 en U qui s'étendent transversalement.

Les fils de chaîne 3 et les fils de trame 4 sont réalisés en un matériau métallique, par exemple en acier zingué, et sont habituellement soudés les uns aux autres pour former la gouttière, sensiblement en U.

Les fils de chaîne 3 et les fils de trame 4 présentent par exemple ici chacun un diamètre d'environ 3 mm à environ 5 mm.

Selon une orientation habituelle du tronçon chemin de câbles 2, qui est configuré pour être fixé sur une base (non représentée), il présente une paroi de fond (non représentée) s'étendant dans un plan horizontal, et deux parois latérales (non représentées) raccordées chacune à la paroi de fond et qui s'étendent en regard l'une de l'autre dans un plan vertical.

En variante, d'autres orientations du tronçon chemin de câbles 2 peuvent être envisagées, par exemple avec la paroi de fond qui s'étend dans un plan vertical plutôt qu'horizontal et les deux parois latérales qui s'étendent dans un plan horizontal plutôt que vertical.

Ce système 1 comporte en outre ici un tronçon d'un câble électrique non isolé 5, aussi appelé câblette, qui permet le raccordement à la masse du tronçon de chemin de câbles 1.

Cette câblette 5 est ici réalisée en cuivre et présente une section comprise entre environ 16 mm² à environ 35 mm².

Dans un tel système 1 de cheminement de câbles électriques et/ou de télécommunications, on notera que le raccordement à la masse ou, en d'autres termes, l'établissement d'une liaison équipotentielle entre les fils de chaînes 3 et les fils de trame 4 et la câblette 5, est généralement réalisé tous les 2 m environ à 20 m environ.

Pour ce faire, le système 1 comporte en outre une pluralité de dispositifs d'interconnexion électrique 6, dont un seul est visible sur la figure 1, lequel est configuré pour établir la liaison équipotentielle entre le tronçon de chemin de câbles 2 visible sur la figure 1 et le tronçon de câblette 5 visible également sur la figure 1.

Le dispositif d'interconnexion électrique 6 est ici monté sur un fil de chaîne 3, où une portion de ce dernier est reçue dans un premier logement 7 du dispositif 6, tandis que le tronçon de câblette 5 est ici monté sur ce dispositif 6, où une portion de cette câblette 5 est reçue dans un second logement 8 du dispositif.

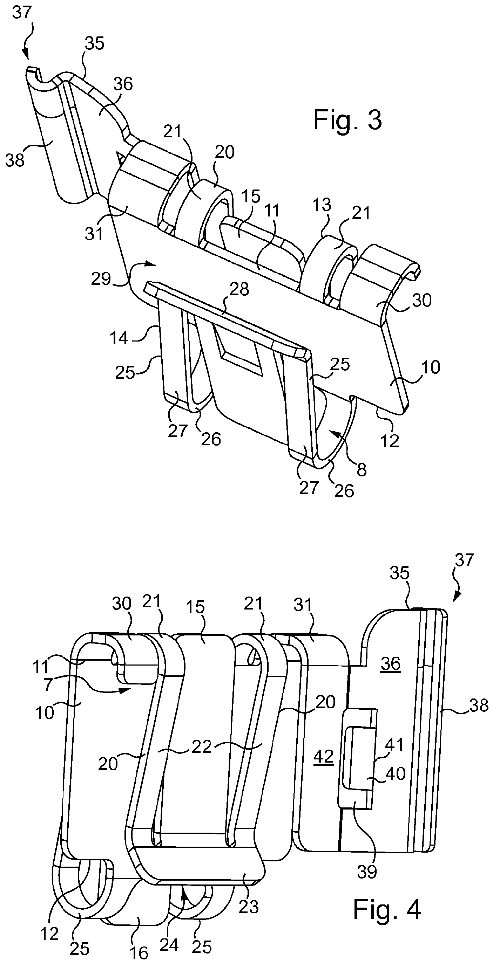

On va décrire en détail le dispositif d'interconnexion électrique 6 en référence aux figures 2 à 5.

Le dispositif d'interconnexion électrique est formé par une agrafe métallique élastique 6, ayant ici une forme générale de S.

Plus précisément, l'agrafe métallique élastique 6 comporte une paroi principale 10 ayant une première extrémité 11 et une seconde extrémité 12 opposée à sa première extrémité 11.

L'agrafe métallique élastique 6 comporte en outre une paroi interne 13 qui s'étend de la première extrémité 11 de la paroi principale 10 et qui définit avec cette dernière le premier logement 7 de cette agrafe métallique élastique 6 ; ainsi qu'une paroi externe 14 qui s'étend de la seconde extrémité 12 de la paroi principale 10 et qui définit avec cette dernière le second logement 8.

L'agrafe métallique élastique 6 comporte une première languette flexible 15 configurée pour venir en saillie dans le premier logement 7 et ainsi solliciter la portion du fil de chaîne 3 du tronçon de chemin de câbles 2 lorsque qu'elle est reçue dans le premier logement 7 ; ainsi qu'une deuxième languette flexible 16 configurée pour venir en saillie dans le second logement 8 et ainsi solliciter la portion du tronçon de câblette 5 lorsque qu'elle est reçue dans le second logement 8.

La première languette flexible 15 est ménagée dans la paroi interne 13 tandis que la deuxième languette flexible 16 est ménagée dans la paroi externe 14.

Plus précisément, la première languette flexible 15 est réalisée par découpe dans la paroi interne 13 et la deuxième languette flexible 16 est réalisée par découpe dans la paroi externe 14.

L'agrafe métallique élastique 6 comporte en outre une patte anti-retour 17 ménagée dans la deuxième languette 16, laquelle patte anti-retour 17 saille également dans le second logement 8 et est configurée pour empêcher la portion du tronçon de câblette 5 de se retirer du second logement 8 sans une sollicitation extérieure sur la paroi externe 14.

La paroi interne 13 présente deux bras flexibles 20 distants l'un de l'autre et ayant chacun une portion incurvée 21 s'étendant depuis la première extrémité 11 de la paroi principale 10 et une portion droite 22 prolongeant la portion incurvée 21 et s'étendant en regard de la paroi principale 10.

La paroi interne 13 présente en outre une portion de jonction 23 reliant les deux bras flexibles 20 par leurs portions droites respectives 22.

La portion de jonction 23 de la paroi interne 13 s'étend depuis les portions droites 22 des bras flexibles 20 en direction opposée à la paroi principale 10 de sorte à former une première ouverture d'introduction 24 du premier logement 7.

La première languette flexible 15 saille de la portion de jonction 23 et s'étend entre les deux bras flexibles 20.

De manière similaire, la paroi externe 14 présente deux bras flexibles 25 distants l'un de l'autre et ayant chacun une portion incurvée 26 s'étendant depuis la deuxième extrémité 12 de la paroi principale 10 et une portion droite 27 prolongeant la portion incurvée 26 et s'étendant en regard de la paroi principale 20.

La paroi externe 14 présente en outre une portion de jonction 28 reliant les deux bras flexibles 20 par leurs portions droites respectives 27.

La portion de jonction 28 de la paroi externe 14 s'étend depuis les portions droites 27 des bras flexibles 25 en direction opposée à la paroi principale 10 de sorte à former une deuxième ouverture d'introduction 29 du second logement 8.

La deuxième languette flexible 16 saille de la portion de jonction 28 et s'étend entre les deux bras flexibles 25.

On notera que la paroi principale 10 s'étend généralement selon un plan principal horizontal tandis que les bras flexibles 20 et 25, respectivement de la paroi interne 13 et de la paroi externe 14, s'étendent en regard de la paroi principale 10 selon des plans sensiblement inclinés par rapport au plan principal horizontal.

Plus précisément, les bras flexibles 20 de la paroi interne 13 s'étendent depuis les portions incurvées 21 vers la portion de jonction 23 en se rapprochant de la première extrémité 11 de la paroi principale 10, de sorte que le premier logement 7 présente une première ouverture d'introduction 24 relativement étroite, ou à tout le moins qui est resserrée par rapport au fond du premier logement 7 au niveau des portions incurvées 21.

De manière similaire, les bras flexibles 25 de la paroi externe 14 s'étendent depuis les portions incurvées 26 vers la portion de jonction 28 en se rapprochant de la deuxième extrémité 12 de la paroi principale 10, de sorte que le second logement 8 présente une deuxième ouverture d'introduction 29 relativement étroite, ou à tout le moins qui est resserrée par rapport au fond du second logement 8 au niveau des portions incurvées 26.

L'agrafe métallique élastique 6 comporte en outre ici deux pattes d'appui incurvées 30 et 31, sensiblement en forme de U, s'étendant chacune depuis la première extrémité 11 de la paroi principale 10 et qui sont ménagées de part et d'autre des bras flexibles 20.

Ces deux pattes d'appui incurvées 30 et 31 sont configurées pour reposer sur la portion de fil de chaîne 3 du tronçon de chemin de câbles 2 lorsque l'agrafe métallique élastique 6 est assemblée sur ce dernier.

Ces deux pattes d'appui incurvées 30 et 31 présentent ici des formes assez similaires à celles des formes des portions incurvées 21 des bras flexibles, qui leurs sont adjacentes.

Le système 1 comporte en outre un organe de positionnement 35 de l'agrafe métallique élastique 6 sur le tronçon de chemin de câbles 2.

Cet organe de positionnement 35 est configuré pour empêcher l'agrafe métallique élastique 6 de se déplacer en rotation autour et/ou en translation vis-à-vis de la portion de fil de chaîne 3 du tronçon de chemin de câbles 2, lorsque cette agrafe métallique élastique 6 est assemblée sur le tronçon de chemin de câbles 2.

L'organe de positionnement 35 est ici formé en une seule pièce avec l'agrafe métallique élastique 6.

Cet organe de positionnement 35 comporte une paroi d'appui 36 ménagée à distance de la paroi principale 10 et configurée pour venir en appui contre une portion d'un fil de trame 4 du tronçon de chemin de câbles 2, qui croise la portion de fil de chaîne 3 sur laquelle est montée l'agrafe métallique élastique 6.

La paroi d'appui 36 présente à une extrémité libre 37 une portion en gouttière 38 de convexité tournée du côté de la paroi principale 10.

L'organe de positionnement 35 comporte en outre une fenêtre 39 ménagée dans la paroi d'appui 36 et un ergot 40 saillant d'un bord 41 de la fenêtre 39 et s'étendant du côté de la paroi principale 10.

Cet ergot 40 est configuré pour venir en butée contre la portion de fil de trame 4 du tronçon de chemin de câbles 2, laquelle est alors interposée entre l'ergot 40 et la portion en gouttière 38.

La paroi d'appui 36 s'étend ici dans un plan incliné par rapport au plan principal dans lequel s'étend globalement la paroi principale 10.

L'organe de positionnement 35 comporte en outre une portion de jonction 42 qui se raccorde à la première extrémité 11 de la paroi principale via un pontet formé ici par la patte d'appui incurvée 31 ; avec la paroi d'appui 36 de l'organe de positionnement 35 qui se raccorde, par une extrémité opposée à son extrémité libre 37, à la portion de jonction 42.

La portion de jonction 42 de l'organe de positionnement 35 s'étend ici globalement en regard de la paroi principale 10 et dans un plan sensiblement parallèle au plan principal dans lequel s'étend globalement cette paroi principale 10.

On va maintenant décrire l'assemblage du système 1 de cheminement de câbles électriques et/ou de télécommunications, successivement par le montage de l'agrafe métallique élastique 6 sur le chemin de câbles 2 et par le montage de la câblette 5 sur cette agrafe 6.

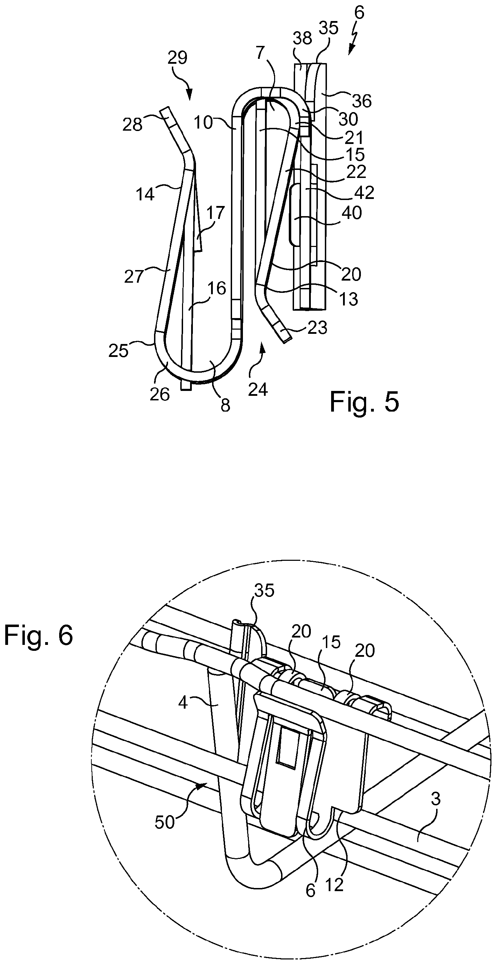

En référence aux figures 6 à 8, l'agrafe métallique élastique 6 est approchée du tronçon de chemin de câbles 2 par l'intérieur du U de la gouttière qu'il forme, au niveau d'une intersection 50 entre une portion d'un fil de chaîne 3 et une portion d'un fil de trame 4 sur une paroi latérale de ce tronçon de chemin de câbles 2.

Plus précisément, l'agrafe métallique élastique 6 est approchée légèrement en biais, c'est-à-dire de manière légèrement inclinée par rapport à l'horizontale, de sorte que la première ouverture d'introduction 24 de son premier logement 7 soit en regard de la portion de fil de chaîne 3, et que l'organe de positionnement 35 soit en regard de la portion de fil de trame 4.

La portion de jonction 23 de la paroi interne 13 est ainsi amenée sensiblement au contact, ou à proximité immédiate, de la portion de fil de chaîne 3 et l'organe de positionnement se trouve à proximité immédiate de l'intersection 50 entre les portions de fils de chaîne 3 et de trame 4.

Avant l'introduction de la portion de fil de chaîne 3 dans le premier logement 7, la première languette flexible 15 est dans une configuration de repos où elle n'est pas sollicitée, configuration de repos dans laquelle elle saille dans le premier logement 7 et l'obture donc au moins partiellement.

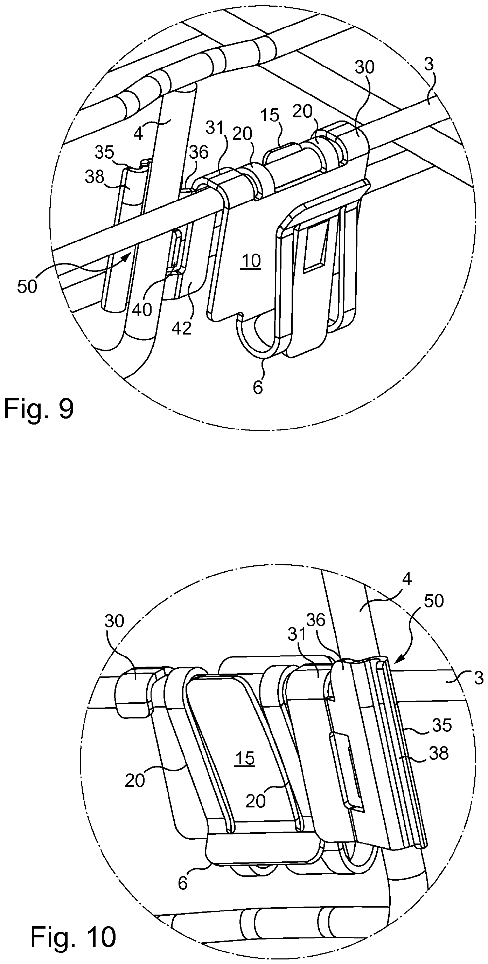

En référence aux figures 9 à 11, la portion de jonction 23 de la paroi interne 13 est ensuite sollicitée à l'encontre de la portion de fil de chaîne 3 pour introduire la portion de fil de chaîne 3 dans le premier logement 7.

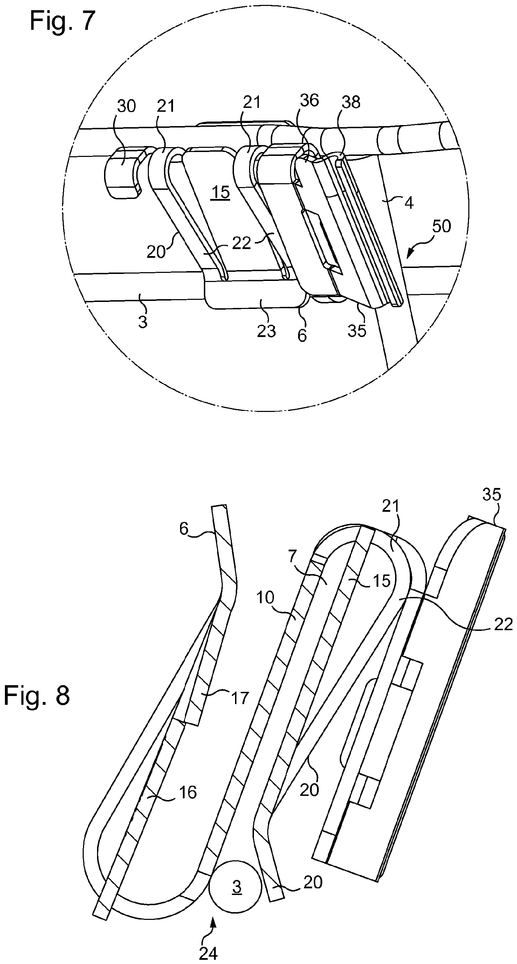

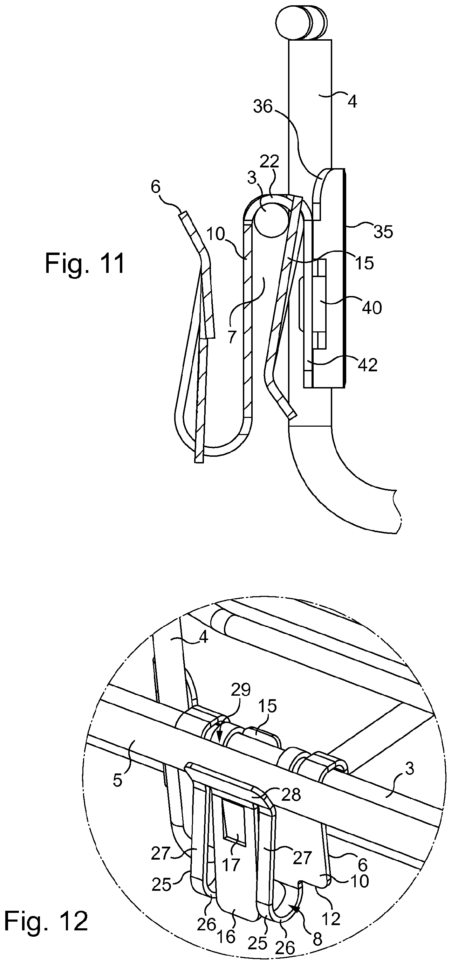

La portion de fil de chaîne 3 est introduite dans le premier logement 7 en glissant contre la paroi principale 10, depuis sa première extrémité 11 vers sa deuxième extrémité 12, tout en agissant à l'encontre à la fois des bras flexibles 20, en particulier des portions droites 22, et de la première languette flexible 15, pour les écarter de la paroi principale 10, au moins temporairement, depuis une position initiale respective (figure 8) vers une position d'insertion respective (figure 11).

La distance d'écartement des bras flexibles 20 et de la première languette flexible 15 dépend du diamètre du fil de chaîne 3. Les bras flexibles 20 ne sont généralement écartés que pendant l'introduction de la portion de fil de chaîne 3 dans le premier logement 7 et reviennent en position initiale dès que cette portion de fil de chaîne 3 est suffisamment introduite dans le premier logement 7.

En d'autres termes, plus la portion de fil de chaîne 3 avance vers le fond du premier logement 7, moins la paroi interne 13 est sollicitée.

Au contraire, plus la portion de fil de chaîne 3 avance vers le fond du premier logement 7, plus elle agit à l'encontre de la première languette flexible 15 et plus cette dernière s'écarte de la paroi principale 10.

L'agrafe métallique élastique 6 est en outre configurée de sorte que, plus la première languette flexible 15 est écartée de la paroi principale 10, plus elle sollicite la portion de fil de chaîne 3 de sorte à la maintenir en position dans le premier logement 7. La première languette flexible 15 est ainsi dans une configuration de travail.

On observera que les pattes d'appuis incurvées 30 et 31 viennent reposer sur la portion de fil de chaîne 3.

L'organe de positionnement 35 est quant à lui positionné en appui contre la portion de fil de trame 4.

Plus précisément, la face de la paroi d'appui 36 qui est tournée du côté de la paroi principale 10 est appliquée contre la portion de fil de trame 4, avec cette dernière qui est au moins partiellement interposée, ou prise sensiblement en sandwich, entre l'ergot 40 et la portion en gouttière 38 de l'organe de positionnement 35.

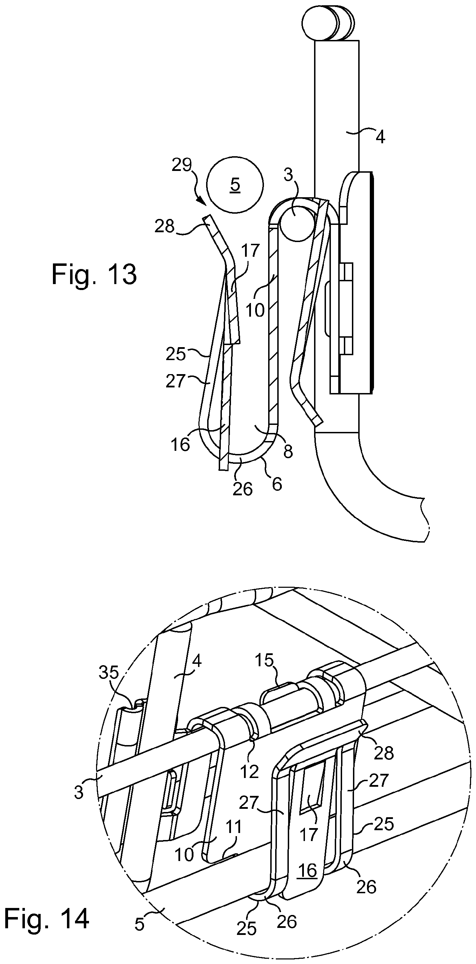

En référence aux figures 12 et 13, le tronçon de câblette 5 est approché de l'agrafe métallique élastique 6 de sorte qu'une portion de ce tronçon de câblette 5 soit en regard de la deuxième ouverture d'introduction 29 du second logement 8 de l'agrafe métallique élastique 6.

La portion du tronçon de câblette 5 est ainsi amenée sensiblement au contact, ou à proximité immédiate, de la portion de jonction 28 de la paroi externe 14.

Avant l'introduction de la portion du tronçon de câblette 5 dans le deuxième logement 8, la deuxième languette flexible 16 est dans une configuration de repos où elle n'est pas sollicitée, configuration de repos dans laquelle elle saille dans le second logement 8 et l'obture donc au moins partiellement.

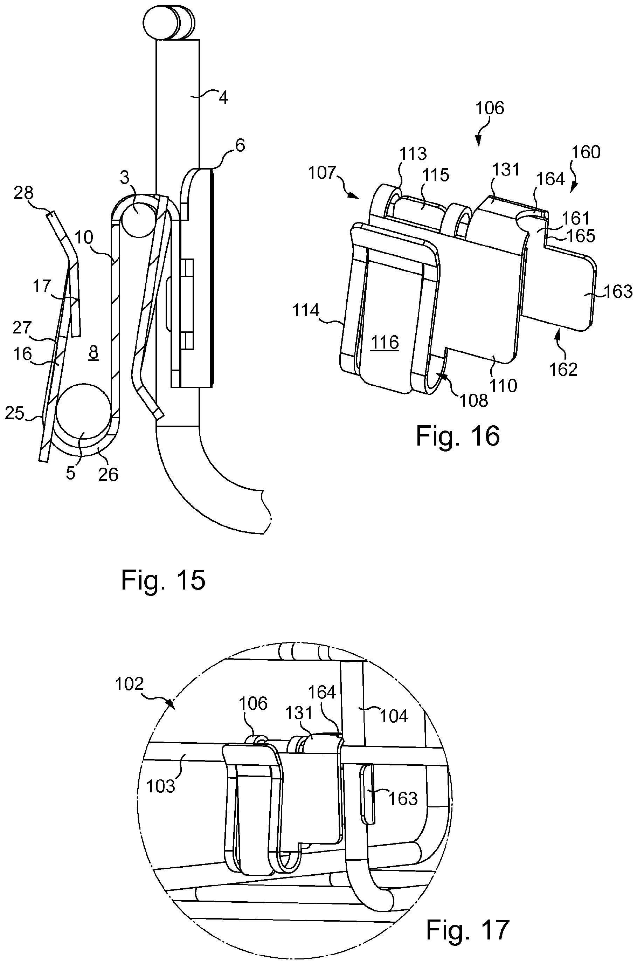

En référence aux figures 14 et 15, la portion du tronçon de câblette 5 est sollicitée à l'encontre de la portion de jonction 28 de la paroi externe 14 pour son introduction dans le second logement 8.

La portion du tronçon de câblette 5 est introduite dans le second logement 8 en glissant contre la paroi principale 10, depuis sa deuxième extrémité 12 vers sa première extrémité 11, tout en agissant à l'encontre à la fois des bras flexibles 25, en particulier des portions droites 27, et de la deuxième languette flexible 16, pour les écarter de la paroi principale 10, au moins temporairement, depuis une position initiale respective (figure 13) vers une position d'insertion respective (figure 15).

La distance d'écartement des bras flexibles 25 et de la deuxième languette flexible 16 dépend de la section de la câblette 5. Les bras flexibles 25 peuvent être écartés seulement pendant l'introduction de la portion de tronçon de câblette 5 dans le second logement 8 et revenir en position initiale (ou presque) dès que cette portion de tronçon de câblette 5 est suffisamment introduite dans le second logement 8.

L'écartement de la deuxième languette flexible 16 vis-à-vis de la paroi principale 10 entraîne aussi l'écartement de la patte anti-retour 17 de cette même paroi principale 10.

En d'autres termes, plus la portion de tronçon de câblette 5 avance vers le fond du second logement 8, moins la paroi externe 14 est sollicitée.

Au contraire, plus la portion de tronçon de câblette 5 avance vers le fond du second logement 8, plus elle agit à l'encontre de la deuxième languette flexible 16 et de la patte anti-retour 17 qu'elle comporte et plus ces dernières s'écartent de la paroi principale 10.

L'agrafe métallique élastique 6 est en outre configurée de sorte que, plus la deuxième languette flexible 16 est écartée de la paroi principale 10, plus elle sollicite la portion de tronçon de câblette 5 de sorte à la maintenir en position dans le second logement 8. La deuxième languette flexible 16 est ainsi dans une configuration de travail.

Au surplus, l'agrafe métallique élastique 6 est configurée de sorte qu'une fois que la portion de tronçon de câblette 5 est suffisamment insérée dans le second logement 8, ou à tout le moins une fois que cette portion de tronçon de câblette 5 a dépassé la patte anti-retour 17, cette dernière empêche la portion de tronçon de câblette 5 de se retirer du second logement 8 sans une sollicitation extérieure sur la paroi externe 14.

En d'autres termes, l'agrafe métallique élastique 6 est configurée de sorte que la plus petite distance laissée entre l'extrémité libre de la patte anti-retour 17 et la paroi principale 10 est au moins légèrement inférieure à la section de la câblette 5.

L'agrafe métallique élastique 6 peut ainsi être assemblé sans outil à la fois avec la portion du fil de chaîne 3 du tronçon de chemin de câbles 2 et avec la portion du tronçon de câblette 5.

En particulier, l'agrafe métallique élastique 6 et la portion du fil de chaîne 3 peuvent être assujetties mécaniquement ensemble par clipsage grâce à la sollicitation de l'agrafe 6 sur cette portion de fil de sorte à introduire cette dernière dans le premier logement 7 de l'agrafe 6.

En outre, l'agrafe métallique élastique 6 et la portion du tronçon de câblette 5 peuvent être assujetties mécaniquement ensemble par clipsage grâce à la sollicitation de cette portion de câblette 5 sur cette agrafe 6 de sorte à introduire la portion de câblette 5 dans le second logement 8 de cette agrafe 6.

Le désassemblage mécanique de l'agrafe métallique élastique 6 vis-à-vis à la fois de la portion de fil de chaîne 3 du tronçon de chemin de câbles 2 et de la portion du tronçon de câblette 5 se fait par conséquent aisément par des actions de déclipsage.

L'agrafe métallique élastique 6, grâce à ses languettes flexibles 15 et 16, permet de maintenir en position à la fois la portion de fil de chaîne 3 du tronçon de chemin de câbles 2 et la portion du tronçon de câblette 5 dans les logements dédiés respectifs 7 et 8 de l'agrafe 6 ; ces portions ne pouvant donc pas se retirer de ces logements dédiés respectifs sans sollicitation extérieure.

L'agrafe élastique 6 et les languettes flexibles 15 et 16 que cette agrafe 6 présente, permettent également de définir des premier et second logements 7 et 8 de tailles variables.

Le dispositif d'interconnexion électrique est ainsi adaptable en ce qu'il offre la possibilité d'être assemblé avec des chemins de câbles 2 de différentes sections et/ou dont les fils de chaîne et/ou de trame ont des diamètres distinct ou des sections distinctes ; et aussi d'être assemblé avec des tronçons de câblette 5 également de différentes sections.

Le dispositif d'interconnexion électrique et le système 1 qui le comporte sont par conséquent particulièrement performants et sûrs tout en restant particulièrement simples, commodes et économiques notamment à la fabrication et à la mise en place.

Les figures 16 et 17 représentent une variante de réalisation de l'agrafe métallique élastique, visible respectivement de manière isolée puis montée sur le chemin de câbles.

D'une manière générale, on a employé pour les éléments similaires, les mêmes numéros de références mais additionnés du nombre 100.

L'agrafe métallique élastique 106 illustrée sur les figures 16 et 17 est relativement similaire à l'agrafe métallique élastique 6 illustrée notamment sur les figures 2 à 5, mais s'en distingue notamment par son organe de positionnement 160.

L'agrafe métallique élastique 106 présente par conséquent elle aussi une forme générale de S, pourvue d'une une paroi principale 110, d'une paroi interne 113 qui s'étend de la première extrémité de la paroi principale 110 et qui définit avec cette dernière le premier logement 107, et d'une paroi externe 114 qui s'étend de la seconde extrémité de la paroi principale 110 et qui définit avec cette dernière le second logement 108.

L'agrafe métallique élastique 106 comporte également une première languette flexible 115 configurée pour venir en saillie dans le premier logement 107 et ainsi solliciter la portion du fil de chaîne 103 du tronçon de chemin de câbles 102 lorsque qu'elle est reçue dans le premier logement 107 ; ainsi qu'une deuxième languette flexible 116 configurée pour venir en saillie dans le second logement 108 et ainsi solliciter la portion du tronçon de câblette lorsque qu'elle est reçue dans le second logement 108.

Plus généralement, la paroi interne 113 et la paroi externe 114 de l'agrafe métallique élastique 106 sont similaires à celles de l'agrafe métallique élastique 6, à l'exception que l'agrafe métallique élastique 106 est dépourvue d'une patte anti-retour ménagée dans sa deuxième languette flexible 116.

Les parois interne 113 et externe 114 présentent ainsi chacune deux bras flexibles distants l'un de l'autre et ayant chacun une portion incurvée s'étendant depuis la première extrémité de la paroi principale 110, une portion droite prolongeant la portion incurvée et s'étendant en regard de la paroi principale 110 ; ainsi qu'une portion de jonction reliant les deux bras flexibles respectifs par leurs portions droites respectives et s'étendant depuis les portions droites des bras flexibles respectifs en direction opposée à la paroi principale 110 de sorte à former les première et deuxième ouvertures d'introduction respectivement des premier et second logements 107 et 108.

A la différence de l'agrafe métallique élastique 6, l'agrafe métallique élastique 106 ne comporte qu'une seule patte d'appui incurvée 131, sensiblement en forme de U, s'étendant depuis la première extrémité de la paroi principale 110 et configurée pour reposer sur la portion de fil de chaîne 103 du tronçon de chemin de câbles 102 lorsque l'agrafe métallique élastique 106 est assemblée sur ce dernier.

L'organe de positionnement 160 est ici formé en une seule pièce avec l'agrafe métallique élastique 106.

Cet organe de positionnement 160 comporte une paroi d'appui 161 ménagée à distance de la paroi principale 110, du côté de la paroi interne 113, et configurée pour venir partiellement en appui contre une portion de fil de trame 104 du tronçon de chemin de câbles 102, qui croise la portion de fil de chaîne 103 sur laquelle est montée l'agrafe métallique élastique 106.

La paroi d'appui 161 se raccorde à la première extrémité de la paroi principale 110 via un pontet formé ici par la patte d'appui incurvée 131 et s'étend globalement en regard de la paroi principale 110 et dans un plan sensiblement parallèle au plan principal dans lequel s'étend globalement cette paroi principale 110.

La paroi d'appui 161 présente à une extrémité libre 162 une portion rabattable 163 par pliage qui est dirigée, dans sa configuration non pliée, dans une direction opposée à la paroi interne 113.

L'organe de positionnement 160 comporte en outre une encoche 164 qui est ménagée dans la patte d'appui incurvée 131 et dont l'ouverture se trouve du côté opposé à la paroi interne 113.

Cette encoche 164 est configurée pour recevoir une portion de fil de trame 104 du tronçon de chemin de câbles 102.

On observera qu'un épaulement 165 est formé à la jonction entre la portion d'appui 161 et la portion rabattable 163 de sorte à permettre le pliage de cette portion rabattable 163 sans être gênée par le fil de trame, à l'intersection entre une portion d'un fil de chaîne 103 et une portion d'un fil de trame 104 sur une paroi latérale de ce tronçon de chemin de câbles 102.

Le montage de l'agrafe métallique élastique 106 sur le tronçon de chemin de câbles se fait comme suit.

L'agrafe métallique élastique 106 est approchée du tronçon de chemin de câbles 102 par l'intérieur ou l'extérieur du U de la gouttière qu'il forme, au niveau d'une intersection entre une portion d'un fil de chaîne 103 et une portion d'un fil de trame 104 sur une paroi latérale de ce tronçon de chemin de câbles 102.

Plus précisément, l'agrafe métallique élastique 106 est approchée de sorte que la première ouverture d'introduction de son premier logement 107 soit en regard de la portion de fil de chaîne 103. L'organe de positionnement 160 n'est à ce stade pas en regard de la portion de fil de trame 4.

La portion de jonction de la paroi interne 113 est amenée sensiblement au contact, ou à proximité immédiate, de la portion de fil de chaîne 103.

Avant l'introduction de la portion de fil de chaîne 103 dans le premier logement 107, la première languette flexible 115 est dans une configuration de repos, où elle n'est pas sollicitée, et saille dans le premier logement 107 qu'elle obture donc au moins partiellement.

La portion de jonction de la paroi interne 113 est ensuite sollicitée à l'encontre de la portion de fil de chaîne 103 pour l'introduire dans le premier logement 107.

La portion de fil de chaîne 103 est introduite dans le premier logement 107 en glissant contre la paroi principale 110, depuis sa première extrémité vers sa deuxième extrémité, tout en agissant à l'encontre à la fois des bras flexibles, en particulier des portions droites, et de la première languette flexible 115, pour les écarter de la paroi principale 110, au moins temporairement, depuis une position initiale respective vers une position d'insertion respective.

La distance d'écartement des bras flexibles et de la première languette flexible 115 dépend du diamètre du fil de chaîne 103. Les bras flexibles ne sont généralement écartés que pendant l'introduction de la portion de fil de chaîne 103 dans le premier logement 107 et reviennent en position initiale dès que cette portion de fil de chaîne 103 est suffisamment introduite dans le premier logement 107.

En d'autres termes, plus la portion de fil de chaîne 103 avance vers le fond du premier logement 107, moins la paroi interne 113 est sollicitée.

Au contraire, plus la portion de fil de chaîne 103 avance vers le fond du premier logement 107, plus elle agit à l'encontre de la première languette flexible 115 et plus cette dernière s'écarte de la paroi principale 110.

L'agrafe métallique élastique 106 est en outre configurée de sorte que, plus la première languette flexible 115 est écartée de la paroi principale 110, plus elle sollicite la portion de fil de chaîne 103 de sorte à la maintenir en position dans le premier logement 107. La première languette flexible 115 est ainsi dans une configuration de travail.

On observera que la patte d'appuis incurvée 131 vient reposer sur la portion de fil de chaîne 103.

L'agrafe métallique élastique 106 est ensuite translatée sur la portion de fil de chaîne 103 jusqu'à ce qu'une portion du fil de trame 104 soit introduite dans l'encoche 164 de l'organe de positionnement 160.

L'agrafe métallique élastique 106 est alors en butée contre la portion du fil de trame 104.

La portion rabattable 163 est ensuite rabattue par pliage sur une portion de fil de trame 4, laquelle est alors au moins partiellement interposée, ou prise sensiblement en sandwich, entre cette portion rabattable 163 et la patte d'appui incurvée 131, au niveau de l'encoche 164.

La portion rabattable 163 se trouve ainsi dans sa configuration pliée où elle s'étend transversalement par rapport à la paroi principale 110 et est dirigée du côté de la paroi externe 114.

Le montage de la portion du tronçon de câblette dans le second logement 108 de l'agrafe métallique élastique 106 se fait exactement de la même manière que dans le second logement 8 de l'agrafe métallique élastique 6.

Dans des variantes non illustrées :
- au moins l'une des parois interne et externe est pourvue de seulement un bras flexible ;
- au moins l'une des première et deuxième languettes flexibles n'est pas réalisée par découpe dans la paroi interne ou externe respective mais est formée par une protubérance s'étendant depuis la paroi interne ou externe respective ;
- la patte anti-retour est ménagée par emboutissage dans la paroi externe ou est formée par une protubérance s'étendant depuis la paroi externe ;
- une patte anti-retour est également ménagée dans ou formée sur la paroi interne ;
- au moins l'une des portions de jonction des parois interne et externe s'étend sensiblement parallèlement à la paroi principale ;
- l'agrafe métallique élastique comporte une seule, ou deux ou plus de deux pattes d'appui incurvées s'étendant depuis la première extrémité de la paroi principale ;
- l'organe de positionnement peut être une pièce distincte assujettie mécaniquement à l'agrafe métallique élastique ;
- la paroi d'appui de l'organe de positionnement présente à son extrémité libre une portion en L plutôt qu'en gouttière ;
- l'ergot de l'organe de positionnement peut être formé par une protubérance rapportée sur la paroi d'appui, qui serait alors dépourvue de fenêtre ;
- la portion du tronçon de câblette peut être introduite dans le second logement avant que l'agrafe métallique élastique ne soit montée sur le tronçon de chemin de câbles ; et/ou
- la portion de fil qui est reçue dans le premier logement de l'agrafe métallique élastique est une portion de fil de trame du tronçon de chemin de câbles plutôt qu'une portion de fil de chaîne.

On rappelle plus généralement que l'invention ne se limite pas aux exemples décrits et représentés.

## Revendications

1. Dispositif d'interconnexion électrique configuré pour établir une liaison équipotentielle entre un tronçon de chemin de câbles (2 ; 102) et un tronçon de câble électrique (5), comportant un premier logement (7 ; 107) configuré pour recevoir une première portion d'un fil de chaîne (3 ; 103) et/ou de trame (4 ; 104) dudit tronçon de chemin de câbles (2 ; 102) et un second logement (8 ; 108) configuré pour recevoir une portion dudit tronçon de câble électrique (5) ; ledit dispositif étant **caractérisé en ce qu'**il est formé par une agrafe métallique élastique (6 ; 106) comportant une première languette flexible (15 ; 115) configurée pour venir en saillie dans ledit premier logement (7 ; 107) et ainsi solliciter ladite première portion de fil de chaîne et/ou de trame dudit tronçon de chemin de câbles (2 ; 102) lorsque qu'elle est reçue dans ledit premier logement, ainsi qu'une deuxième languette flexible (16 ; 116) configurée pour venir en saillie dans ledit second logement (8 ; 108) et ainsi solliciter ladite portion dudit tronçon de câble électrique (2 ; 102) lorsque qu'elle est reçue dans ledit second logement; avec lesdites première languette flexible et deuxième languette flexible qui permettent de définir respectivement des premier logement et second logement de tailles variables ;
ladite agrafe métallique élastique (6 ; 106) présentant une forme générale de S, ayant une paroi principale (10 ; 110), une paroi interne (13 ; 113) s'étendant d'une première extrémité (11) de ladite paroi principale (10 ; 110) et définissant avec cette dernière ledit premier logement (7 ; 107), une paroi externe (14 ; 114) s'étendant d'une seconde extrémité (12) de ladite paroi principale (10 ; 110), opposée à sa première extrémité (11), et définissant avec cette paroi principale (10 ; 110) ledit second logement (8 ; 108) ; ladite première languette flexible (15 ; 115) étant ménagée dans ladite paroi interne (13 ; 113) et ladite deuxième languette flexible (16 ; 116) étant ménagée dans ladite paroi externe (14 ; 114) ;
ladite première languette flexible (15 ; 115) étant réalisée par découpe dans ladite paroi interne (13 ; 113) et/ou ladite deuxième languette flexible (16 ; 116) étant réalisée par découpe dans ladite paroi externe (14 ; 114) ; **caractérisé en ce que** ladite paroi interne (13 ; 113) présentant deux bras flexibles (20) distants l'un de l'autre et ayant chacun une portion incurvée (21) s'étendant depuis ladite première extrémité (11) de ladite paroi principale (10 ; 110) et une portion droite (22) prolongeant ladite portion incurvée (21) et s'étendant en regard de ladite paroi principale (10 ; 110), ainsi qu'une portion de jonction (23) reliant les deux dits bras flexibles (20) par leurs portions droites (22) respectives, avec ladite première languette flexible (15 ; 115) qui saille de ladite portion de jonction (23) et qui s'étend entre les deux dits bras flexibles (20) ; et/ou ladite paroi externe (14 ; 114) présentant deux bras flexibles (25) distants l'un de l'autre et ayant chacun une portion incurvée (26) s'étendant depuis ladite deuxième extrémité (12) de ladite paroi principale (10 ; 110) et une portion droite (27) prolongeant ladite portion incurvée (26) et s'étendant en regard de ladite paroi principale (10 ; 110), ainsi qu'une portion de jonction (28) reliant les deux dits bras flexibles (25) par leurs portions droites (27) respectives, avec ladite deuxième languette flexible (16 ; 116) qui saille de ladite portion de jonction (28) et qui s'étend entre les deux dits bras flexibles (25).

2. Dispositif selon la revendication 1, **caractérisé en ce que** ladite agrafe métallique élastique (6) comporte une patte anti-retour (17) ménagée dans ladite deuxième languette (16), saillant dans ledit second logement (8) et configurée pour empêcher ladite portion dudit tronçon de câble électrique (2) de se retirer dudit second logement (8) sans une sollicitation extérieure sur ladite paroi externe (14).

3. Dispositif selon l'une des revendications 1 et 2, **caractérisé en ce que** ladite portion de jonction (23) de ladite paroi interne (13 ; 113) s'étend depuis lesdites portions droites (22) desdits bras flexibles (20) en direction opposée à ladite paroi principale (10 ; 110) de sorte à former une première ouverture d'introduction (24) dudit premier logement (7 ; 107) ; et/ou ladite portion de jonction (28) de ladite paroi externe (14 ; 114) s'étend depuis lesdites portions droites (27) desdits bras flexibles (25) en direction opposée à ladite paroi principale (10; 110) de sorte à former une deuxième ouverture d'introduction (29) dudit second logement (8 ; 108).

4. Dispositif selon l'une quelconque des revendications 1 à 3, **caractérisé en ce que** ladite agrafe métallique élastique (6 ; 106) comporte au moins une patte d'appui (30, 31 ; 131) incurvée, s'étendant depuis ladite première extrémité (11) de ladite paroi principale (10 ; 110) et configurée pour reposer sur ladite première portion de fil de chaîne et/ou de trame dudit tronçon de chemin de câbles (2 ; 102), lorsque ladite agrafe métallique élastique (6 ; 106) est assemblée sur ledit tronçon de chemin de câbles (2 ; 102).

5. Dispositif selon l'une quelconque des revendications 1 à 4, **caractérisé en ce qu'**il comporte un organe de positionnement (35 ; 160) de ladite agrafe métallique élastique (6 ; 106) sur ledit tronçon de chemin de câbles (2), configuré pour empêcher cette dernière de se déplacer en rotation autour et/ou en translation vis-à-vis de ladite première portion de fil de chaîne et/ou de trame dudit tronçon de chemin de câbles (2 ; 102), lorsque ladite agrafe métallique élastique (6 ; 106) est assemblée sur ledit tronçon de chemin de câbles (2 ; 102).

6. Dispositif selon la revendication 5, **caractérisé en ce que** ledit organe de positionnement (35 ; 160) est formé en une seule pièce avec ladite agrafe métallique élastique (6 ; 106).

7. Dispositif selon la revendication 6, **caractérisé en ce que** ledit organe de positionnement (35) comporte une paroi d'appui (36) ménagée à distance de ladite paroi principale (10) et configurée pour venir en appui contre une deuxième portion d'un fil de trame et/ou de chaîne dudit tronçon de chemin de câbles (2), ladite paroi d'appui (36) présentant à une extrémité libre (37) une portion en gouttière (38) de convexité tournée du côté de ladite paroi principale (10).

8. Dispositif selon la revendication 7, **caractérisé en ce que** ledit organe de positionnement (35) comporte une fenêtre (39) ménagée dans ladite paroi d'appui (36) et un ergot (40) saillant d'un bord (41) de ladite fenêtre (39) et configuré pour venir en butée contre ladite deuxième portion de fil de trame et/ou de chaîne dudit tronçon de chemin de câbles (2), laquelle deuxième portion est alors interposée entre ledit ergot (40) et ladite portion en gouttière (38).

9. Dispositif selon la revendication 8, **caractérisé en ce que** ladite paroi principale (10) s'étend globalement dans un plan principal et ladite paroi d'appui (36) s'étend dans un plan incliné par rapport audit plan principal.

10. Dispositif selon l'une des revendications 7 à 9, **caractérisé en ce que** ladite agrafe métallique élastique (6) comporte un pontet s'étendant depuis ladite première extrémité (11) de ladite paroi principale (10) et se raccordant à une portion de jonction (42) prolongeant ladite paroi d'appui (36).

11. Système de cheminement de câbles électriques et/ou de télécommunications, comportant au moins un tronçon de chemin de câbles (2 ; 102) ayant une forme de gouttière et présentant des fils de chaîne (3 ; 103) qui s'étendent longitudinalement et des fils de trame (4 ; 104) en U qui s'étendent transversalement, au moins un tronçon d'un câble électrique non isolé (5) et au moins un dispositif d'interconnexion électrique selon l'une quelconque des revendications 1 à 10.

12. Système selon la revendication 11, **caractérisé en ce que** ladite au moins une agrafe métallique élastique (6 ; 106) est configurée pour recevoir une portion d'un fil de chaîne (3 ; 103) dudit au moins un tronçon de chemin de câbles (2 ; 102) dans son premier logement (7 ; 107) et pour recevoir une portion dudit au moins un tronçon de câble électrique non isolé (5) dans son second logement (8 ; 108).

## Patentansprüche

1. Elektrische Verbindungsvorrichtung, die dazu ausgelegt ist, einen Potentialausgleich zwischen einem Kabeltrassenabschnitt (2; 102) und einem Stromkabelabschnitt (5) herzustellen, enthaltend eine erste Aufnahme (7; 107), die dazu ausgelegt ist, ein erstes Teilstück eines Kett- (3; 103) und/oder Schussdrahts (4; 104) des Kabeltrassenabschnitts (2; 102) aufzunehmen, und eine zweite Aufnahme (8; 108), die dazu ausgelegt ist, ein Teilstück des Stromkabelabschnitts (5) aufzunehmen;
wobei die Vorrichtung **dadurch gekennzeichnet ist, dass**
sie aus einer Metallfederklemme (6; 106) gebildet ist, die eine erste biegsame Lasche (15; 115) enthält, die dazu ausgelegt ist, in die erste Aufnahme (7; 107) hineinzuragen und so das erste Kett- und/oder Schussdrahtteilstück des Kabeltrassenabschnitts (2; 102) zu beaufschlagen, wenn es in der ersten Aufnahme aufgenommen ist, sowie eine zweite biegsame Lasche (16; 116), die dazu ausgelegt ist, in die zweite Aufnahme (8; 108) hineinzuragen und so das Teilstück des Stromkabelabschnitts (2; 102) zu beaufschlagen, wenn es in der zweiten Aufnahme aufgenommen ist; wobei die erste biegsame Lasche und die zweite biegsame Lasche gestatten, eine erste bzw. eine zweite Aufnahme veränderlicher Größe zu definieren; wobei die Metallfederklemme (6; 106) eine Form im Allgemeinen eines S aufweist, die eine Hauptwand (10; 110), eine Innenwand (13; 113), welche sich von einem ersten Ende (11) der Hauptwand (10; 110) ausgehend erstreckt und mit letzterer die erste Aufnahme (7; 107) definiert, eine Außenwand (14; 114), die sich von einem dem ersten Ende (11) entgegengesetzten zweiten Ende (12) der Hauptwand (10; 110) ausgehend erstreckt und mit dieser Hauptwand (10; 110) die zweite Aufnahme (8; 108) definiert, wobei die erste biegsame Lasche (15; 115) in der Innenwand (13; 113) ausgeführt ist und die zweite biegsame Lasche (16; 116) in der Außenwand (14; 114) ausgeführt ist;
wobei die erste biegsame Lasche (15; 115) durch Ausstanzen aus der Innenwand (13; 113) ausgebildet ist und/oder die zweite biegsame Lasche (16; 116) durch Ausstanzen aus der Außenwand (14; 114) ausgebildet ist, **dadurch gekennzeichnet, dass**
die Innenwand (13; 113) zwei biegsame Arme (20) aufweist, die voneinander beabstandet sind und jeweils einen gekrümmten Abschnitt (21), der sich von dem ersten Ende (11) der Hauptwand (10; 110) ausgehend erstreckt, und einen geraden Abschnitt (22) aufweisen, der den gekrümmten Abschnitt (21) fortsetzt und sich der Hauptwand (10; 110) gegenüberliegend erstreckt, sowie einen Verbindungsabschnitt (23), der die beiden biegsamen Arme (20) durch ihre jeweiligen geraden Abschnitte (22) verbindet, wobei die erste biegsame Lasche (15; 115) von dem Verbindungsabschnitt (23) vorspringt und sich zwischen den beiden biegsamen Armen (20) erstreckt; und/oder die Außenwand (14; 114) zwei biegsame Arme (25) aufweist, die voneinander beabstandet sind und jeweils einen gekrümmten Abschnitt (26), der sich von dem zweiten Ende (12) der Hauptwand (10; 110) ausgehend erstreckt, und einen geraden Abschnitt (27) aufweisen, der den gekrümmten Abschnitt (26) fortsetzt und sich der Hauptwand (10; 110) gegenüberliegend erstreckt, sowie einen Verbindungsabschnitt (28), der die beiden biegsamen Arme (25) durch ihre jeweiligen geraden Abschnitte (27) verbindet, wobei die zweite biegsame Lasche (16; 116) von dem Verbindungsabschnitt (28) vorspringt und sich zwischen den beiden biegsamen Armen (25) erstreckt.

2. Vorrichtung nach Anspruch 1, **dadurch gekennzeichnet, dass** die Metallfederklemme (6) eine in der zweiten Lasche (16) ausgeführte Rückkehrsperrzunge (17) aufweist, die in die zweite Aufnahme (8) hineinragt und dazu ausgelegt ist, das Teilstück des Stromkabelabschnitts (2) daran zu hindern, sich ohne äußere Beaufschlagung der Außenwand (14) aus der zweiten Aufnahme (8) zu entfernen.

3. Vorrichtung nach einem der Ansprüche 1 und 2, **dadurch gekennzeichnet, dass** sich der Verbindungsabschnitt (23) der Innenwand (13; 113) von den geraden Abschnitten (22) der biegsamen Arme (20) in einer der Hauptwand (10; 110) entgegengesetzten Richtung erstreckt, um eine erste Einführöffnung (24) der ersten Aufnahme (7; 107) zu bilden; und/oder der Verbindungsabschnitt (28) der Außenwand (14; 114) sich von den geraden Abschnitten (27) der biegsamen Arme (25) in einer der Hauptwand (10; 110) entgegengesetzten Richtung erstreckt, um eine zweite Einführöffnung (29) der zweiten Aufnahme (8; 108) zu bilden.

4. Vorrichtung nach einem der Ansprüche 1 bis 3, **dadurch gekennzeichnet, dass** die Metallfederklemme (6; 106) zumindest einen gekrümmten Stützlappen (30, 31; 131) aufweist, der sich von dem ersten Ende (11) der Hauptwand (10; 110) ausgehend erstreckt und dazu ausgelegt ist, auf dem ersten Kett- und/oder Schussdrahtteilstück des Kabeltrassenabschnitts (2; 102) aufzuliegen, wenn die Metallfederklemme (6; 106) an dem Kabeltrassenabschnitt (2; 102) montiert ist.

5. Vorrichtung nach einem der Ansprüche 1 bis 4, **dadurch gekennzeichnet, dass** sie ein Positionierglied (35; 160) zum Positionieren der Metallfederklemme (6; 106) an den Kabeltrassenabschnitt (2) enthält, das dazu ausgelegt ist, letztere daran zu hindern, sich bezüglich des ersten Kett- und/oder Schussdrahtteilstücks des Kabeltrassenabschnitts (2; 102) zu verdrehen und/oder zu verschieben, wenn die Metallfederklemme (6; 106) an dem Kabeltrassenabschnitt (2; 102) montiert ist.

6. Vorrichtung nach Anspruch 5, **dadurch gekennzeichnet, dass** das Positionierglied (35; 160) einstückig mit der Metallfederklemme (6; 106) ausgebildet ist.

7. Vorrichtung nach Anspruch 6, **dadurch gekennzeichnet, dass** das Positionierglied (35) eine Stützwand (36) enthält, die in einem Abstand von der Hauptwand (10) ausgebildet und dazu ausgelegt ist, in Anlage an ein zweites Schuss- und/oder Kettdrahtteilstück des Kabeltrassenabschnitts (2) zu gelangen, wobei die Stützwand (36) an einem freien Ende (37) einen konvex rinnenförmigen Abschnitt (38) aufweist, der mit seiner Ausbauchung der Hauptwand (10) zugewandt ist.

8. Vorrichtung nach Anspruch 7, **dadurch gekennzeichnet, dass** das Positionierglied (35) ein Fenster (39), das in der Stützwand (36) ausgeführt ist, und einen Vorsprung (40) enthält, der von einer Kante (41) des Fensters (39) vorspringt und dazu ausgelegt ist, in Anschlag an das zweite Schuss- und/- oder Kettdrahtteilstück des Kabeltrassenabschnitts (2) zu gelangen, wobei das zweite Teilstück dann zwischen dem Vorsprung (40) und dem rinnenförmigen Abschnitt (38) eingefügt ist.

9. Vorrichtung nach Anspruch 8, **dadurch gekennzeichnet, dass** die Hauptwand (10) sich insgesamt in einer Hauptebene erstreckt und die Stützwand (36) sich in einer Ebene erstreckt, die in Bezug auf die Hauptebene geneigt ist.

10. Vorrichtung nach einem der Ansprüche 7 bis 9, **dadurch gekennzeichnet, dass** die Metallfederklemme (6) eine Brücke enthält, die sich von dem ersten Ende (11) der Hauptwand (10) ausgehend erstreckt und mit einem Verbindungsabschnitt (42) verbunden ist, der die Stützwand (36) fortsetzt.

11. System zum Führen von Strom- und/oder Telekommunikationskabeln, enthaltend zumindest einen Kabeltrassenabschnitt (2; 102), der eine Rinnenform hat und Kettdrähte (3; 103), die sich in Längsrichtung erstrecken, und U-förmige Schussdrähte (4; 104) aufweist, die sich in Querrichtung erstrecken, zumindest einen nicht isolierten Stromkabelabschnitt (5) und zumindest eine elektrische Verbindungsvorrichtung nach einem der Ansprüche 1 bis 10.

12. System nach Anspruch 11, **dadurch gekennzeichnet, dass** die zumindest eine Metallfederklemme (6; 106) dazu ausgelegt ist, ein Teilstück eines Kettdrahts (3; 103) des zumindest einen Kabeltrassenabschnitts (2; 102) in ihrer ersten Aufnahme (7; 107) aufzunehmen und ein Teilstück des zumindest einen nicht isolierten Stromkabelabschnitts (5) in ihrer zweiten Aufnahme (8; 108) aufzunehmen.

## Claims

1. Electrical interconnection device configured to establish an equipotential connection between a section of cable tray (2 ; 102) and a section of electric cable (5), comprising a first accommodation (7 ; 107) configured to receive a first portion of a warp wire (3 ; 103) and/or of a weft wire (4 ; 104) of said section of cable tray (2 ; 102) and a second accommodation (8 ; 108) configured to receive a portion of said section of electric cable (5); said device being **characterized in that** it is formed by an elastic metal clip (6 ; 106) comprising a first flexible tab (15 ; 115) configured to come to project into said first accommodation (7 ; 107) and thereby act on said first portion of warp wire and/or of weft wire of said section of cable tray (2 ; 102) when it is received in said first accommodation, as well as a second flexible tab (16 ; 116) configured to come to project into said second accommodation (8 ; 108) and thereby act on said portion of said section of electric cable (2 ; 102) when it is received in said second accommodation, said first flexible tab and second flexible tab making it possible to define respectively first and second accommodations of variable sizes;
said elastic metal clip (6 ; 106) having the general shape of an S, having a first main wall (10 ; 110), an inside wall (13 ; 113) extending from a first end (11) of said main wall (10 ; 110) and defining with the latter said first accommodation (7 ; 107), an outside wall (14 ; 114) extending from a second end (12) of said main wall (10 ; 110), which is an opposite end to its first end (11), and defining with that main wall (10 ; 110) said second accommodation (8 ; 108); said first flexible tab (15 ; 115) being provided in said inside wall (13 ; 113) and said second flexible tab (16 ; 116) being provided in said outside wall (14 ;114);
said first flexible tab (15 ; 115) being made by cutting into said inside wall (13 ; 113) and/or said second flexible tab (16 ; 116) being made by cutting into said outside wall (14 ; 114);
**characterized in that** said inside wall (13 ; 113) has two flexible arms (20) remote from each other and each having a curved portion (21) extending from said first end (11) of said main wall (10 ; 110) and a straight portion (22) prolonging said curved portion (21) and extending facing opposite said main wall (10 ; 110), as well as a joining portion (23) connecting the two said flexible arms (20) by their respective straight portions (22), said first flexible tab (15 ; 115) projecting from said joining portion (23) which extends between the two said flexible arms (20); and/or said outside wall (14 ; 114) has two flexible arms (25) remote from each other and each having a curved portion (26) extending from said second end (12) of said main wall (10 ; 110) and a straight portion (27) prolonging said curved portion (26) and extending facing opposite said main wall (10 ; 110), as well as a joining portion (28) connecting the two said flexible arms (25) by their respective straight portions (27), said second flexible tab (16 ; 116) projecting from said joining portion (28) which extends between the two said flexible arms (25).

2. Device according to claim 1, **characterized in that** said elastic metal clip (6) comprises a non-return lug (17) provided in said second tab (16), projecting into said second accommodation (8) and configured to prevent said portion of said section of electric cable (2) from withdrawing from said second accommodation (8) without external action on said outside wall (14).

3. Device according to one of claims 1 and 2, **characterized in that** said joining portion (23) of said inside wall (13 ; 113) extends from said straight portions (22) of said flexible arms (20) in a direction away from said main wall (10 ; 110) so as to form a first insertion opening (24) of said first accommodation (7 ; 107); and/or said joining portion (28) of said outside wall (14 ; 114) extends from said straight portions (27) of said flexible arms (25) in a direction away from said main wall (10 ; 110) so as to form a second insertion opening (29) of said second accommodation (8 ; 108);

4. Device according to any one of claims 1 to 3, **characterized in that** said elastic metal clip (6 ; 106) comprises at least one curved bearing lug (30, 31 ; 131), extending from said first end (11) of said main wall (10 ; 110) and configured to rest on said first portion of warp wire and/or of weft wire of said section of cable tray (2 ; 102), when said elastic metal clip (6 ; 106) is mounted on said section of cable tray (2 ; 102).

5. Device according to any one of claims 1 to 4, **characterized in that** it comprises a positioning member (35 ; 160) for positioning said elastic metal clip (6 ; 106) on said section of cable tray (2), configured to prevent rotational movement around, and/or translation movement in relation to, said first portion of warp wire and/or of weft wire of said section of cable tray (2 ; 102), when said elastic metal clip (6 ; 106) is mounted on said section of cable tray (2 ; 102).

6. Device according to claim 5, **characterized in that** said positioning member (35 ; 160) is formed as a single part with said elastic metal clip (6 ; 106).

7. Device according to claim 6, **characterized in that** said positioning member (35) comprises a bearing wall (36) provided at a distance from said main wall (10) and configured to come to bear against a second portion of a weft and/or warp wire of said section of cable tray (2), said bearing wall (36) having at a free end (37) a channel portion (38) having convexity turned towards said main wall (10).

8. Device according to claim 7, **characterized in that** said positioning member (35) comprises a window (39) provided in said bearing wall (36) and a projection (40) protruding from an edge (41) of said window (39) and configured to come into abutment against said second portion of weft and/or warp wire of said section of cable tray (2), which second portion is then interposed between said projection (40) and said channel portion (38).

9. Device according to claim 8, **characterized in that** said main wall (10) extends generally in a main plane and said bearing wall (36) extends in a plane inclined relative to said main plane.

10. A device according to one of claims 7 to 9, **characterized in that** said elastic metal clip (6) comprises a bridging member extending from said first end (11) of said main wall (10) joining a joining portion (42) prolonging said bearing wall (36).

11. System for conveying electric and/or telecommunication cables, comprising at least one section of cable tray (2 ; 102) having a channel shape and having warp wires (3 ; 103) which extend longitudinally and U-shaped weft wires (4 ; 104) which extend transversely, at least one section of an uninsulated electric cable (5) and at least one electrical interconnection device according to any one of claims 1 to 10.

12. System according to claim 11, **characterized in that** said at least one elastic metal clip (6 ; 106) is configured to receive a portion of a warp wire (3 ; 103) of said at least one section of cable tray (2 ; 102) in its first accommodation (7 ; 107) and to receive a portion of said at least one section of uninsulated electric cable (5) in its second accommodation (8 ; 108).
